# EUROPÄISCHE PATENTSCHRIFT

(11) **EP 0 780 279 B1**
(45) Veröffentlichungstag und Bekanntmachung des Hinweises auf die Patenterteilung: **09.06.1999**
(21) Anmeldenummer: 96120234.8
(22) Anmeldetag: 17.12.1996
(51) Int. Cl.: B61D 17/04, B62D 27/02

(54) **Schienenfahrzeug**
Railway vehicle
Véhicule ferroviaire

(30) Priorität: 23.12.1995 DE 19548725
(43) Veröffentlichungstag der Anmeldung: 25.06.1997
(73) Patentinhaber: ABB Daimler-Benz Transportation (Technology) GmbH, 13627 Berlin (DE)
(72) Erfinder: Elsner, Helmut, Dr., 12163 Berlin (DE); Tegeler, Ferdinand, 13587 Berlin (DE); Eisbrecher, Hans-Dieter, Dr., 34246 Vellmar (DE)
(74) Vertreter: Luderschmidt, Schüler & Partner GbR

(56) Entgegenhaltungen:
- DE-A- 4 202 391
- FR-A- 2 046 581
- US-A- 5 320 403

## Beschreibung

Die Erfindung betrifft ein Verfahren zur Herstellung eines Schienenfahrzeuges für die Personenbeförderung mit wenigstens einem trogartig ausgebildeten Wagenkasten, mit einem Wagenkastenboden und mit daran anschließenden, aus schräg angestellten Seitenwandsäulen, unteren Längsträgern sowie oberen Längsgurten gebildeten Seitenwänden in Fachwerkbauweise, welche oberen Längsgurte über Verbindungsträger gegenseitig abgestützt sind, welche Seitenwände Fenster sowie Einstiegsbereiche Türen aufweisen, wobei die Seitenwandsäulen zickzack-förmig angeordnet und mit den unteren Langträgern und den oberen Längsgurten biegesteif verbunden sind und als Tragelemente für die daran befestigten Fenster und Seitenverkleidungselemente dienen, sowie einen derartig hergestellten Schienenfahrzeug.

Unter Schienenfahrzeugen werden in diesem Zusammenhang sämtliche spurgeführten Landfahrzeuge zur Personenbeförderung verstanden, und zwar sowohl die hierbei zum Einsatz kommenden Triebfahrzeuge als auch die nicht angetriebenen sondern an die Triebfahrzeuge angehängten Waggons. Derartige als Massenverkehrsmittel dienende Schienenfahrzeuge für die Personenbeförderung sind allgemein bekannt und werden vorwiegend im Kurzstreckenverkehr, zum Beispiel als S-Bahn- oder als U-Bahn-Züge, eingesetzt. Entsprechend den hierbei auftretenden hohen mechanischen Beanspruchungen sind die vorgesehenen bekannten Motorwagen und Waggons demensprechend festigkeitsmäßig ausgelegt und gestaltet, was sich allerdings nachteilig auf deren Gewicht und hieraus resultierend auf deren Betriebsstroffverbrauch auswirkt. Ein Schienenfahrzeug in einer leichteren Bauweise, das heißt eine gewichtssparende Konstruktion des Schienenfahrzeugs, ist daher anzustreben.

Ein derartiges Schienenfahrzeug mit geringerem Eigengewicht ist bekannt aus der DE 94 15 771 U1. Dieses Schienenfahrzeug ist entsprechend der eingangs genannten Art gestaltet, das heißt, es besitzt einen Wagenkasten in Fachwerkbauweise mit schräg angestellten Seitenwandsäulen, die vorzugsweise nur auf Zug und Druck, nicht aber auf Schub oder durch Biegemomente beansprucht werden. Diese Seitenwandsäulen bilden mit oberen und unteren Längsträgern ein zickzack-förmiges Fachwerk, welches mit einer nichttragenden, das heißt an der Krafteinleitung beziehungsweise an der Kraftübertragung nicht beteiligten, Außenverkleidung versehen ist, wobei die jeweiligen Verbindungsstellen der Längsträger mit den Seitenwandsäulen als geschweißte Knotenpunkte ausgebildet sind.

Die Herstellung von Schweißverbindungen ist zeitaufwendig infolge der jeweiligen erforderlichen Schweißnahtvorbereitung sowie der Richtarbeiten, um den durch die Schweißwärme hervorgerufenen Verzug zu beseitigen. Darüber hinaus kann unter Umständen, das heißt abhängig von den verwendeten Werkstoffen, zum Beispiel bei hochfesten Stählen, eine exakt zu beachtenden Temperaturführung und gegebenenfalls Wärmebehandlung notwendig sein. Außerdem sind toleranzverträgliche Konstruktionen für den Innenausbau des Wagenkastens erforderlich.

Als eine mögliche Alternative angesehene Schraub- und/oder Nietkonstruktionen verursachen zwar keine wärmeverzugsbedingten Richtarbeiten, doch ist der Fertigungsaufwand hierbei dem von Schweißkonstruktionen vergleichbar. Ferner ist mit einem erhöhten Gewicht im Vergleich zu Schweißkonstruktionen zu rechnen, so daß diese Konstruktionsvariante auch im Hinblick auf gewichtsverminderte Lösungen ausscheidet.

Ausgehend von diesem Stand der Technik ist es Aufgabe der Erfindung, ein Fertigungsverfahren zur Herstellung eines Schienenfahrzeugs der eingangs genannten Art zu schaffen, dessen Gestaltung im Sinne einer Gewichtsersparnis optimiert ist, ohne daß hieraus Nachteile für das Schienenfahrzeug aufgrund der mechanischen Beanspruchungen resultieren, die auf Einwirkungen von außen zurückzuführen sind. Dabei soll das neue Verfahren unter Beibehaltung der Fachwerkbauweise des Schienenfahrzeugs die aufgezeigten Nachteile vermeiden und dessen Fertigung mit geringerem Zeitbedarf ermöglichen. Ferner soll ein nach dem erfindungsgemäßen Verfahren gefertigtes Schienenfahrzeug angegeben werden.

Zur Lösung dieser Aufgabe dienen erfindungsgemäß die kennzeichnenden Merkmale der Ansprüche 1 und 2. Entsprechend der Erfindung wird der Wagenkasten aus abgelängten Stabteilen und Formstücken zusammengesetzt. Dabei werden die zusammengesteckten Formstücke und die Stabteile ausgerichtet und anschließend die Verbindungsflächen zwischen den Stabteilen und den Formstücke mit Klebstoff versehen. Die Verklebung der zu verbindenden Stabteile und Formstücke erfolgt, indem der Klebstoff zwischen deren Kontaktflächen abbindet. Abhängig vom verwendetem Klebemittel erfolgt die Aushärtung des Klebstoffs üblicherweise bei Umgebungstemperatur.

Danach erfolgt die Anbringung der Außenverkleidung und Fenster mittels Dickschicht-Klebetechnik. Diese Dickschichtklebungen dienen dazu, die Geräuschfortpflanzung zu unterbinden, indem der aus der tragenden Struktur des Wagenkastens herrührende Körperschall entkoppelt wird. Selbstverständlich werden die zur Klebung vorgesehenen Kontaktflächen vor dem Aufbringung des Klebemittels, das heißt vor der Montage, für die Klebung vorbereitet, das heißt mechanisch und/oder chemisch gereinigt und entfettet. Hierdurch ist gewährleistet, daß Klebfehler praktisch ausgeschlossen werden können.

Erfindungsgemäß ist also eine sogenannte trockene Montage der im folgenden als Stabteile bezeichneten Längsgurte und Seitenwandsäulen und der hiermit zu verbindenden Formstücke vorgesehen, welche im wesentlichen den Wagenkasten bilden. Erst wenn die Stabteile und Formstücke ineinander gesteckt und ausgerichtet sind, wird das die Verbindung stoffschlüssig sichernde Klebemittel eingebracht, welches anschließend selbsttätig abbindet, zum Beispiel über Nacht, ohne daß weitere Maßnahmen erforderlich sind.

Entsprechend der erfindungsgemäßen Fertigung sind die jeweiligen Klebungen so ausgelegt, daß bewußt nicht die Grenze der erreichbaren Festigkeit derartiger Verbindungen ausgenutzt wird, sondern daß die Verbindungsklebungen ein Optimum an Langlebigkeit und Betriebssicherheit wie auch an Sicherheit bei der Verarbeitung erreichen. Hierzu weisen die Formstücke, wie bereits angesprochen, für die Verbindung mit den Stabteilen jeweils Anschlußbereiche auf, deren Länge auf die zu übertragenden Kräfte abgestimmt ist, so daß ausreichende Reserven für besondere Beanspruchungsfälle gewährleistet sind, ohne daß die Grenzfestigkeit erreicht wird.

Ferner ist entsprechend einer vorteilhaften Weiterbildung der Erfindung zur Erhöhung der Fertigungssicherheit vorgesehen, daß die Stabteile und die Formstücke aus artgleichem Werkstoff gefertigt sind, was darüber hinaus die Möglichkeit eröffnet, zwecks Erhöhung der Verbindungssicherheit die Stabteile untereinander mittels Kaltpreßschweißen zu verbinden.

Ein nach dem erfindungsgemäßen Verfahren hergestelltes Schienenfahrzeug für die Personenbeförderung ist dadurch gekennzeichnet, daß der Wagenkasten aus miteinander verbundenen Profilen und Formstücken gebildet ist, wobei die Formstücke als Knotenpunkte ausgebildet sind, die Profile mit den Formstücken zusammensteckbar sind und hierbei gemeinsame Berührungsflächen aufweisen und die gemeinsamen Berührungsflächen miteinander jeweils einen Spalt begrenzen, der mit Klebemittel ausgefüllt ist, welches die Profile und Formstücke stoffschlüssig miteinander verbindet.

Für die Einbringung des Klebemittels in den jeweiligen Spalt sind vorteilhafterweise entsprechend angeordnete sogenannte Applikationskanäle vorgesehen, welche das leichte Eindringen des Klebemittels in den Spalt zwischen den Stabteilen einerseits und den Formstücken andererseits ermöglichen. Die Spaltflächen, das heißt die gegenseitigen Kontaktflächen der Formstücke und der Stabteile sind hierbei im Hinblick auf die angreifenden Beanspruchungen ausreichend groß bemessen.

Entsprechend einer bevorzugten Ausführungsform der Erfindung sind die Formstücke als Gußelemente vorgesehen, die je nach erforderlicher Stückzahl als Druckguß, Kokillenguß-oder als Sandgußstücke aus einer Metallegierung, zum Beispiel Stahlguß oder Leichtmetallguß, hergestellt sein können. Vorzugsweise sind die Formstücke jedoch als Sandgußstücke gefertigt. Diese Fertigungsmöglichkeit erlaubt den wirtschaftlichen Einsatz der Erfindung bereits bei Kleinserien.

An Stelle von Gußstücken können entsprechend einer weiteren vorteilhaften Ausgestaltung der Erfindung die Formstücke auch von Schmiedestücken gebildet sein, welche vorzugsweise entsprechend einer vorteilhaften Ausführungsform ebenfalls aus einer Metallegierung im Gesenk gefertigt sind.

Im Hinblick auf eine rationelle Fertigung kann es vorteilhaft sein, prinzipiell nur eine einzige Profilabmessung vorzusehen, so daß lediglich die jeweilige Länge der mit den Formstücken zu verbindenden Stäbe eingestellt werden muß.

Diese konstruktive Lösungsvariante hat den großen Vorteil, daß das jeweilige Profil stets nur abgelängt werden muß, bevor es mit dem zugeordneten Formstück verbunden wird. Dies kann vorteilhafterweise in einem entsprechend vorbereiteten Werkzeug mit einfachen Spannmitteln erfolgen, da keine unterschiedlichen Querschnitte zu verarbeiten sind.

Eine weitere Ausgestaltung der Erfindung sieht vor, daß die als Gußelemente oder als Schmiedekörper ausgebildeten Formstücke sehr komplex gestaltet sind, so daß sämtliche Anschlußstellen, zum Beispiel bei der Gestaltung der Türportale, in das Formstück integriert werden können. Dies führt einerseits zu einer Verringerung der Anzahl der erforderlichen Einzelteile und andererseits zu einer einfacheren und dadurch schnelleren Türmontage, wobei zusätzlich die Fertigungssicherheit ebenfalls verbessert ist.

In Weiterbildung der Erfindung sind die Stabteile als Profile, vorzugsweise als Hohlprofile mit rechteck- oder kreisförmigem Querschnitt, ausgebildet. Dabei können die Stabteile in entsprechende rohrstutzenähnliche Ausnehmungen der Formstücke eingreifen. Vorteilhafterweise ist jedoch vorgesehen, daß die als Hohlprofile ausgebildeten Stabteile auf an den Formstücken angeformte Führungszapfen oder Führungsdorne aufgeschoben und mit diesen verklebt werden.

Um die Tragfähigkeit der Langträger im Hinblick auf die auftretenden Beanspruchungen zu verbessern, kann in weiterer Ausgestaltung der Erfindung vorgesehen sein, daß die Langträger jeweils aus einem, längs durchlaufenden und mit den unteren Formstücken verbundenen nach oben offenen Profil gebildet sind, in welches die Formstücke eingeklebt sind.

In Weiterbildung der Erfindung kann eine alternative Ausgestaltung hierzu darin bestehen, daß die Langträger von einzelnen, längslaufenden und ebenfalls mit den unteren Formstücken verbundenen Profilen besteht, wobei die Zugkräfte des Langträgers in der jeweiligen Klebung als Schubkräfte übertragen werden.

Ferner kann in weiterer Ausgestaltung der Erfindung eine Kombination der beiden vorstehend beschriebenen Lösungsvarianten vorgesehen sein.

Für die beim erfindungsgemäßen Verfahren beziehungsweise beim erfindungsgemäßen Schienenfahrzeug zum Einsatz kommenden Klebungen sind vorzugsweise zweikomponentige Polyurethan-Klebstoffe vorgesehen. Statt dessen können auch zweikomponentige Epoxidharzkleber beziehungsweise auch sogenannte No-Mix-Acrylatharze mit chemisch wirksamem Aktivator vorgesehen sein.

Um eine ausreichende Verarbeitungs- und Betriebssicherheit einer Klebeverbindung gemäß der Erfindung zu erhalten, ist es zweckmäßig, wie bereits zuvor erwähnt, die Beschaffenheit der jeweiligen Klebeflächen durch entsprechende Vorbehandlung, wie Strahlen, Beizen, pyrolytische Vorbehandlung oder Aufbringen von sogenannten Haftvermittlern (Primer) einzustellen. Diese Vorbehandlung sorgt für eine definierte und adhäsionsfreundliche Klebefläche und damit für eine zuverlässige Klebung.

Wesentlich für die erfindungsgemäße Konstruktion des Schienenfahrzeugs ist das aus schräg unter einem Winkel von etwa 30° bis maximal 70°angestellten Seitenwandsäulen gebildete Fachwerk, das ohne die sonst üblicherweise vorgesehenen vertikalen Träger auskommt. Mit dieser Gestaltung ist es möglich, die Träger bzw. Seitenwandsäulen frei von Biegemomenten zu halten und nur mit Zug- bzw. Druckkräften zu beanspruchen.

Entsprechend einer bevorzugten Ausgestaltung der Erfindung sind die Seitenwandsäulen unter einem Winkel von 60° ± 10° an ihren Enden zueinander schräg gestellt, wobei ihre Enden an dem Langträger bzw. dem Längsgurt dicht beieinander oder gar überlappend angeordnet sind.

Diese zickzackartige Fachwerkbauweise der Seitenwandsäulen wird lediglich in den Einstiegsbereichen durch vertikal angeordnete Türsäulen unterbrochen, wobei die Türsäulen vorzugsweise aus verstärkten Profilen gefertigt sind, um so eine angreifende Querkraft abtragen zu können. Dabei sind die Türsäulen, welche jeweils eine von Türen verschließbare Einstiegsöffnung einfassen, ebenfalls mit den unteren Langträgern und den oberen Längsgurten biegesteif verbunden.

Entsprechend dem zugrundeliegenden Konzept ist der erfindungsgemäße Schienenfahrzeug in Niederflurbauweise ausgeführt, wobei der Wagenkasten einen tiefliegenden, zwischen den beiden stirnseitig anschließenden Kopfstücken angeordneten Niederflurbereich aufweist, in welchem auch die Einstiegsbereiche angeordnet sind, und jeweils beidendig anschließende Kopfstücke, deren Bodenniveau gegenüber dem Niederflurbereich erhöht ist. Der Niederflurbereich umfaßt wenigstens 60 % der Nutzfläche des Wagenkastens.

Die an den Seitenwandsäulen befestigten Fenster bzw. Seitenwandelemente sind vorzugsweise an deren Außenseite daran angeklebt, wobei zusätzliche Brüstungsgurte vorgesehen sind, welche als horizontale Anlagefläche sowohl für die Fenster als auch für die Seitenwandelemente dienen. Die Brüstungsgurte sind an der Kraftübertragung nicht beteiligt und können daher relativ einfach mittels Klemm- und/oder Schraubverbindung an den Seitenwandsäulen bzw. Türsäulen befestigt sein.

Die durch die Fachwerkbauweise erzielte Gewichtsminderung kann gegenüber der heute allgemein üblichen Vollwandbauweise bis zu 25 % betragen, wobei aufgrund der Verwendung von Sandwich-Bauteilen für die Seitenwandelemente zusätzlich eine um 50 % gegenüber dem heutigen Stand verbesserte Wärmedämmung erreicht werden kann. Hieraus ist klar erkennbar, daß mit der erfindungsgemäßen Ausgestaltung eines Schienenfahrzeugs der Energiebedarf erheblich gesenkt werden kann. Ferner sind auch die Unterhaltungskosten für den Betrieb eines derartigen Schienenfahrzeugs niedriger als für vergleichbare bekannte Fahrzeuge. Darüber hinaus ist mit der erfindungsgemäß vorgesehenen Konstruktion auch eine um wenigstens 10 % verbesserte Schalldämmung möglich.

Eine vorteilhafte, die Außenseitenwände betreffende Ausgestaltung der Erfindung zeichnet sich dadurch aus, daß hierfür Sandwich-Platten vorgesehen sind, die eine aus gewebeverstärktem Kunstharz, zum Beispiel GC-GFK2, gebildete Deckschicht und einen Kunststoffkern, vorzugsweise aus PVC-Hartschaum, aufweist. Dabei hat der Kunststoffkern eine Dicke von etwa 15 mm, während die gesamte Sandwichplatte eine Gesamtdicke von 20 mm einhält. Zusätzlich kann auf der Außenseite des erfindungsgemäßen Schienenfahrzeugs, das heißt an der Sandwichplatte, ein Blech, vorzugsweise aus Leichtmetall, angeordnet sein.

Eine alternative Ausgestaltung der zum Einsatz beim erfindungsgemäßen Schienenfahrzeug vorgesehenen Sandwichplatten weist einen zwischen zwei Holzplatten angeordneten Kunststoffkern auf, wobei auf dessen Außenseite ebenfalls ein Blech, zum Beispiel aus Leichtmetall, und auf der Innenseite eine Kunststoffplatte angeordnet sein kann.

Diese und weitere vorteilhafte Ausgestaltungen sind Gegenstand der Unteransprüche.

Anhand eines in der schematischen, nicht maßstäblichen Zeichnung dargestellten Ausführungsbeispieles sollen die Erfindung, vorteilhafte Ausgestaltungen und besondere Vorteile näher erläutert und beschrieben werden.

Es zeigen:
- Fig. 1: einen einteiligen Schienenfahrzeug gemäß der Erfindung in Seitenansicht,
- Fig. 2: einen Wagenkasten gemäß der Erfindung im Rohzustand, wie er in dem Schienenfahrzeug gemäß Fig. 1 zum Einsatz kommt, in Seitenansicht und
- Fig. 3: einen von einem Formstück und Stabteilen gebildeten Knoten gemäß der Erfindung.

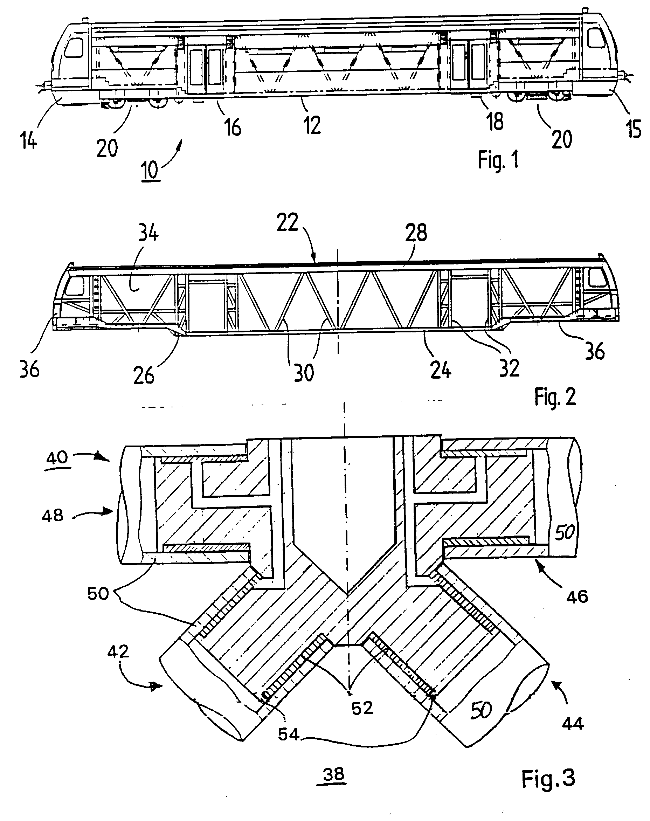

In Fig. 1 ist ein Schienenfahrzeug 10 dargestellt, das in Niederflurbauweise ausgebildet ist, wobei sein Niederflurbereich 12 mittig angeordnet ist und jeweils beidendig von Schienenfahrzeugköpfen 14, 15 eingefaßt ist. Der Niederflurbereich umfaßt etwa 2/3 der gesamten Nutzfläche des Schienenfahrzeugs 10 und ist auf jeder Längsseite mit zwei Einstiegsbereichen 16, 18 versehen. Während die Schienenfahrzeugköpfe 14, 15 wegen dort untergebrachter Fahrwerke 20 und deren Antrieben einen erhöhten Bodenbereich aufweisen, wie insbesondere aus Fig. 2 ersichtlich ist, ist der Niederflurbereich 12 bodennah gestaltet, so daß das Ein- und Aussteigen der Fahrgäste problemlos möglich ist.

Der in Fig. 2 in Seitenansicht dargestellte Wagenkasten 22 ist in etwa trogartig ausgebildet, nämlich mit einem Wagenkastenboden 24, der beiderseits von Langträgern 26 eingefaßt ist. Die Langträger 26 bilden gemeinsam mit jeweils einem oberen Längsgurt 28 und dazwischen angeordneten Seitenwandsäulen 30 bzw. Türsäulen 32 die Seitenwände 34 des trogartigen Wagenkastens 22.

Die Seitenwandsäulen 30 sind schräg zueinander angeordnet und schließen hierbei jeweils einen Winkel von etwa 60° zwischen sich ein. Die Enden der Seitenwandsäulen sind jeweils nebeneinander oder überlappend angeordnet und biegesteif mit dem unteren Langträger 26 bzw. dem oberen Längsgurt 28 verbunden. Weitere Versteifungen, insbesondere vertikale oder horizontale Versteifungen sind für die Kraftübertragung nicht vorgesehen und auch nicht erforderlich. Die Seitenwandsäulen 30 sind in Fig. 1 mittels punktierter Linien angedeutet, wobei im Bereich der Fenster diese Linien durchgezogen sind.

Lediglich in den Einstiegsbereichen 18 sind vertikal angeordnete Türsäulen vorgesehen, die so einen ungehinderten Zugang in den Schienenfahrzeug 10 gewährleisten. Um die aus den Seitenwandsäulen 30 übertragenen Kräfte aufnehmen und abtragen zu können, sind die Türsäulen 32 im gezeigten Beispiel von parallel zueinander angeordneten Doppelprofilen gebildet, die aus Versteifungsgründen mittels Schrägstreben verstärkt sind. Die in den Kopfstücken 36 des Wagenkastens 22 vorgesehene abweichende Gestaltung der Anordnung der Seitenwandsäulen 30 beruht auf den im Übergangsbereich von dem Niederflurbereich 24 zu den Kopfstücken 36 sich überlappenden Beanspruchungen.

Die Innenverkleidung ist jeweils von einer Abdeckung gebildet, die von innen gegen das Fachwerk angelegt und vorzugsweise formschlüssig daran gehalten ist, z. B. mittels entsprechender Profile, in welche die Abdeckplatten mit dem oberen bzw. unteren Rand eingeführt sind. Statt dessen oder zusätzlich kann auch eine Klebeverbindung zwischen den Fachwerkträgern und den Abdeckungen vorgesehen sein.

In Fig. 3 ist ein Knoten 38 dargestellt, der von einem Formstück 40 mit vier hieran angeformten rundstutzenähnlichen Anformungen 42, 44, 46, 48 mit auf diese Anformungen 42, 44, 46, 48 aufgesteckten aus Hohlprofilen mit Kreisquerschnitt gebildeten Stabteilen 50 gebildet ist. Die Stabteile 50 können hierbei sowohl als Seitenwandsäule 30 als auch als Langträger 26 eingesetzt sein.

Das Formstück 38 ist vorzugsweise als Gußteil aus einer Leichtmetallegierung gefertigt und besitzt an seinen Anformungen 42, 44, 46, 48 jeweils Hinterschneidungen 52, welche zum freien Ende hin jeweils von einem umlaufenden Rand 54 begrenzt sind. Dieser Rand 54 dient einerseits als Führung für das zugeordnete, aufgesteckte Stabteil 50 und andererseits als Begrenzung für das über sogenannte Applikationskanäle 56 zugeführte Klebemittel.

## Patentansprüche

1. Verfahren zur Herstellung eines schienengebundenen Schienenfahrzeugs (10) für die Personenbeförderung mit wenigstens einem trogartig ausgebildeten Wagenkasten (22), mit einem Wagenkastenboden (24) und mit daran anschließenden, aus Seitenwandsäulen (30), unteren Langträgern (26) sowie oberen Längsgurten (28) gebildeten Seitenwänden (34) in Fachwerkbauweise, welche oberen Längsgurte (28) über Verbindungsträger gegenseitig abgestützt sind, welche Seitenwände (34) Fenster sowie Einstiegsbereiche (16, 18) mit Türen aufweisen, wobei die Seitenwandsäulen (30) zickzack-förmig angeordnet und mit den unteren Langträgern (26) und den oberen Längsgurten (28) biegesteif verbunden sind und als Tragelemente für die daran befestigten Fenster und Seitenverkleidungselemente dienen, dadurch gekennzeichnet, daß der Wagenkasten (22) aus Formstücken (40) und abgelängten Stabteilen (50) zusammengesetzt wird, daß die Seitenwandsäulen (30), die Langträger (26) und die Längsgurte (28) aus den Stabteilen gebildet werden, daß die mit den Formstücken (40) zusammengesteckten Stabteile (50) ausgerichtet werden, daß die Verbindungsflächen zwischen den Stabteilen (50) und den Formstücken (40) mit Klebemittel versehen werden, daß anschließend die Verklebung der zu verbindenden Stabteile (50) und Formstücke (40) erfolgt, wobei das Klebemittel abbindet, und daß danach die Anbringung der Außenverkleidung und Fenster mittels Dickschicht-Klebetechnik erfolgt.

2. Schienenfahrzeug (10) für die Personenbeförderung herstellbar nach dem Verfahren nach Anspruch 1 mit wenigstens einem trogartig ausgebildeten Wagenkasten (22), mit einem Wagenkastenboden (24) und mit daran anschließenden, aus Seitenwandsäulen 30), unteren Langträgern (26) sowie oberen Längsgurten (28) gebildeten Seitenwänden (34) in Fachwerkbauweise, welche oberen Längsgurte (28) über Verbindungsträger gegenseitig abgestützt sind, welche Seitenwände (34) Fenster sowie Einstiegsbereiche (16, 18) mit Türen aufweisen, dadurch gekennzeichnet, daß der Wagenkasten (22) aus miteinander verbundenen Stabteilen (50) und Formstücken (40) gebildet ist, daß die Seitenwandsäulen (30), die Langträger (26) und die Längsgurte (28) aus den Stabteilen gebildet werden, daß die Formstücke (40) mit den Stabteilen (50) Knotenpunkte bilden, daß die Stabteile (50) mit den Formstücken (40) zusammengesteckt sind und hierbei gemeinsame Berührungsflächen aufweisen, daß die gemeinsamen Berührungsflächen miteinander jeweils einen Spalt (52) begrenzen, der mit Klebemittel ausgefüllt ist, welches die Profile und Formstücke stoffschlüssig miteinander verbindet.

3. Schienenfahrzeug nach Anspruch 2, dadurch gekennzeichnet, daß als Formstücke (40) Gußelemente vorgesehen sind.

4. Schienenfahrzeug nach Anspruch 2, dadurch gekennzeichnet, daß als Formstücke (40) Schmiedestücke vorgesehen sind.

5. Schienenfahrzeug nach einem der Ansprüche 2 bis 4, dadurch gekennzeichnet, daß die Formstücke (40) aus einer Leichtmetallegierung gefertigt sind.

6. Schienenfahrzeug nach einem der Ansprüche 2 bis 5, dadurch gekennzeichnet, daß die Formstücke (40) für die Verbindung mit den Stabteile (50) jeweils Anschlußbereiche (52) aufweisen, deren Länge auf die zu übertragenden Kräfte abgestimmt ist.

7. Schienenfahrzeug nach einem der Ansprüche 2 bis 6, dadurch gekennzeichnet, daß der Wagenkastenboden (24) von einem Wellblechboden mit Querträgern gebildet ist, der die Kräfte aus der Nutzlast aufnimmt und in die Seitenwände (34) und in die unteren Langträger (26) ableitet und daß die Seitenwandsäulen (30) als Tragelemente für daran befestigte Fenster und Seitenverkleidungselemente dienen, welche Seitenwandsäulen (30) zickzackartig angeordnet und mit den unteren Langträgern (26) und den oberen Längsgurten (28) biegesteif verbunden sind.

8. Schienenfahrzeug nach einem der Ansprüche 2 bis 7, dadurch gekennzeichnet, daß die Seitenwandsäulen (30) unter einem Winkel von 60° ± 10° zueinander schräg angestellt sind.

9. Schienenfahrzeug nach einem der Ansprüche 2 bis 8, dadurch gekennzeichnet, daß lediglich im Einstiegsbereich (16, 18) senkrechte Türsäulen (32) vorgesehen sind, welche ebenfalls mit den unteren Längsträgern (26) und den oberen Längsgurten (28) biegesteif verbunden sind und jeweils eine von Türen verschließbare Einstiegsöffnung einfassen.

10. Schienenfahrzeug nach einem der Ansprüche 2 bis 9, dadurch gekennzeichnet, daß der Wagenkasten (22) einen tiefliegenden Niederflurbereich (12) mit den Einstiegsbereichen (16, 18) aufweist, an welchen beidendig Kopfstücke (14, 15) anschließen, welche gegenüber dem Niederflurbereich (12) erhöht sind.

11. Schienenfahrzeug nach einem der Ansprüche 2 bis 10, dadurch gekennzeichnet, daß der Niederflurbereich (12) wenigstens 60 % der Nutzfläche des Wagenskasten (22) umfaßt.

12. Schienenfahrzeug nach einem der Ansprüche 2 bis 11, dadurch gekennzeichnet, daß jeweils von der Langträgerunterkante (26) bis zu der Fensterunterkante sowie von der Fensteroberkante bis zu den oberen Längsgurten (28) auf der Innenseite angeordnete Seitenverkleidungselemente angesetzt sind.

13. Schienenfahrzeug nach einem der Ansprüche 2 bis 12, dadurch gekennzeichnet, daß Brüstungsgurte als horizontale Anlage für die Fenster und die Seitenwandelemente vorgesehen sind.

14. Schienenfahrzeug nach Anspruch 13, dadurch gekennzeichnet, daß die Brüstungsgurte mittels Schraub- und/oder Klemmverbindung mit den Seitenwandsäulen (30) verbunden sind und nicht an der Übertragung von Kräften aus dem Fachwerk beteiligt sind.

15. Schienenfahrzeug nach Anspruch 13 oder 14, dadurch gekennzeichnet, daß die Brüstungsgurte jeweils in Höhe der Fensterunterkante und der Fensteroberkante angeordnet sind.

16. Schienenfahrzeug nach einem der Ansprüche 2 bis 15, dadurch gekennzeichnet, daß die Seitenwandelemente und die Fenster bündig aneinanderstoßen.

17. Schienenfahrzeug nach einem der Ansprüche 2 bis 16, dadurch gekennzeichnet, daß die zur Kraftübertragung dienenden Stabteile (50) aus Hohlprofilen mit rundem Querschnitt gefertigt sind.

18. Schienenfahrzeug nach einem der Ansprüche 2 bis 16, dadurch gekennzeichnet, daß die zur Kraftübertragung dienenden Stabteile (50) aus Hohlprofilen mit rechteckförmigem Querschnitt gefertigt sind.

19. Schienenfahrzeug nach einem der Ansprüche 17 oder 18, dadurch gekennzeichnet, daß Stabteile (50) aus offenen Hohlprofilen zur Kraftübertragung vorgesehen sind.

20. Schienenfahrzeug nach einem der Ansprüche 2 bis 19, dadurch gekennzeichnet, daß für die außen angeordnete Seitenverkleidung Wandplatten in Sandwich-Bauweise vorgesehen sind.

21. Schienenfahrzeug nach einem der Ansprüche 2 bis 19, dadurch gekennzeichnet, daß die Wandplatten für die Außenseitenverkleidung einen zwischen zwei Holzplatten eingesetzten Kunststoffkern aufweisen, und daß auf deren Außenseite ein Leichtmetallblech und auf deren Innenseite ein Belag aus Kunststoff angeordnet ist.

22. Schienenfahrzeug nach einem der Ansprüche 2 bis 21, dadurch gekennzeichnet, daß die Fenster durchgehend von Einstiegsbereich zu Einstiegsbereich vorgesehen sind.

23. Schienenfahrzeug nach einem der Ansprüche 2 bis 22, dadurch gekennzeichnet, daß die Fenster und innenliegenden Seitenwandelemente an den Seitenwandsäulen, an den Brüstungsgurten sowie an den Türsäulen mittels Klebeverbindung befestigt sind.

24. Schienenfahrzeug nach einem der Ansprüche 2 bis 23, dadurch gekennzeichnet, daß das Dach des Schienenfahrzeugs aus Formteilen gebildet ist.

25. Schienenfahrzeug nach Anspruch 24, dadurch gekennzeichnet, daß die Formteile für das Wagendach in Sandwich-Bauweise gefertigt sind.

26. Schienenfahrzeug nach einem der Ansprüche 2 bis 25, dadurch gekennzeichnet, daß sämtliche Stoßfugen an den Seitenwandelementen, an den Fenstern sowie an den Dachformteilen mit Dichtmaterial versiegelt sind.

27. Schienenfahrzeug nach Anspruch 9, dadurch gekennzeichnet, daß für die Türsäulen (32) verstärkte Profile vorgesehen sind, die jeweils beiderseits jeder Einstiegsöffnung angeordnet sind.

28. Schienenfahrzeug nach Anspruch 9 oder 27, dadurch gekennzeichnet, daß für die Türsäulen (32) das gleiche Profil wie für die Seitenwandsäulen (30) vorgesehen ist und daß jeweils zwei parallel zueinander angeordnete Türsäulen (32) auf jeder Seite einer Einstiegsöffnung angeordnet sind, die mittels Schrägstäben miteinander verbunden und versteift sind.

## Claims

1. A method of constructing a rail-borne rail vehicle (10) for the transportation of passengers, comprising at least one trough-shaped superstructure (22), a superstructure floor (24) and adjoining side walls (34) comprising side-wall pillars (30), lower longitudinal members (26) and upper longitudinal chords (28) in a trelliswork structure, the upper longitudinal chords (28) being mutually supported via connecting supports, the side walls (34) having windows and access regions (16, 18) with doors, wherein the side-wall pillars (30) are arranged in a zig-zag manner and are rigidly connected to the lower longitudinal members (26) and the upper longitudinal chords (28) and act as supporting members for the windows and side paneling components fixed thereto, characterised in that the superstructure (22) is composed of shaped parts (40) and bar parts (50) cut to length, in that the side-wall pillars (30), the longitudinal members (26) and the longitudinal chords (28) are formed from the bar parts, in that the bar parts (50), fitted together with the shaped parts (40), are aligned, in that the connecting surfaces between the bar parts (50) and the shaped parts (40) are provided with adhesive, in that the bar parts (50) and the shaped parts (40) to be connected are then stuck together, whereupon the adhesive sets, and in that the outer panelling and windows are then mounted by means of thick-film adhesive technology.

2. A rail vehicle (10) for the transportation of passengers, constructable by the method according to claim 1, comprising at least one trough-shaped superstructure (22), a superstructure floor (24) and adjoining side walls (34) comprising side-wall pillars (30), lower longitudinal members (26) and upper longitudinal chords (28) in a trelliswork structure, the upper longitudinal chords (28) being mutually supported via connecting supports, the side walls (34) having windows and access regions (16, 18) with doors, characterised in that the superstructure (22) is formed from interconnected bar parts (50) and shaped parts (40), in that the side-wall pillars (30), the longitudinal members (26) and the longitudinal chords (28) are formed from the bar parts, in that the shaped parts (40) together with the bar parts (50) form junction points, in that the bar parts (50) and the shaped parts (40) are fitted together and have common contact surfaces, and in that the common contact surfaces together bound a gap (52) which is filled with adhesive interconnecting the sections and the shaped parts to form a material bond.

3. A rail vehicle according to claim 2, characterised in that castings are provided as shaped parts (40).

4. A rail vehicle according to claim 2, characterised in that forgings are provided as shaped parts (40).

5. A rail vehicle according to any one of claims 2 to 4, characterised in that the shaped parts (40) are manufactured from a light-metal alloy.

6. A rail vehicle according to any one of claims 2 to 5, characterised in that the shaped parts (40) each have connecting regions (52) for connection to the bar parts (50), the length of the connecting regions (52) being adapted to the forces to be transmitted.

7. A rail vehicle according to any one of claims 2 to 6, characterised in that the superstructure floor (24) is formed by a corrugated metal base provided with transverse members and absorbing the forces from the payload and transmitting them into the side walls (34) and the lower longitudinal members (26), and in that the side-wall pillars (30) act as supporting members for windows and side paneling components fixed thereto, the side-wall pillars (30) being arranged in a zig-zag manner and being rigidly connected to the lower longitudinal members (26) and the upper longitudinal chords (28).

8. A rail vehicle according to any one of claims 2 to 7, characterised in that the side-wall pillars (30) are arranged at an angle of 60° ± 10° to one another.

9. A rail vehicle according to any one of claims 2 to 8, characterised in that vertical door pillars (32) are provided only in the access region (16, 18) and are also rigidly connected to the lower longitudinal members (26) and the upper longitudinal chords (28) and in each case surround an access opening closable by doors.

10. A rail vehicle according to any one of claims 2 to 9, characterised in that the superstructure (22) has a low-lying low-floor region (12) provided with the access regions (16, 18) and adjoined at either end by head pieces (14, 15) which are higher than the low-floor region (12).

11. A rail vehicle according to any one of claims 2 to 10, characterised in that the low-floor region (12) comprises at least 60% of the useful area of the superstructure (22).

12. A rail vehicle according to any one of claims 2 to 11, characterised in that side panelling components arranged on the inside are mounted from the lower edge of the longitudinal member (26) to the lower edge of the window and from the upper edge of the window to the upper longitudinal chords (28).

13. A rail vehicle according to any one of claims 2 to 12, characterised in that parapet chords are provided as a horizontal support for the windows and the side-wall components.

14. A rail vehicle according to claim 13, characterised in that the parapet chords are connected to the side-wall pillars (30) by means of a screw connection and/or a clamped connection and do not participate in the transmission of forces from the trelliswork.

15. A rail vehicle according to claim 13 or 14, characterised in that the parapet chords are arranged at the level of the lower edge of the window and the upper edge of the window.

16. A rail vehicle according to any one of claims 2 to 15, characterised in that the side-wall components and the windows abut so as to be flush with one another.

17. A rail vehicle according to any one of claims 2 to 16, characterised in that the force-transmitting bar parts (50) are manufactured from hollow sections of round cross-section.

18. A rail vehicle according to any one of claims 2 to 16, characterised in that the force-transmitting bar parts (50) are manufactured from hollow sections of rectangular cross-section.

19. A rail vehicle according to either one of claims 17 and 18, characterised in that bar parts (50) comprising open hollow sections are provided for force transmission.

20. A rail vehicle according to any one of claims 2 to 19, characterised in that sandwich-structure wall plates are provided for the side paneling arranged on the outside.

21. A rail vehicle according to any one of claims 2 to 19, characterised in that the wall plates for the outer side paneling comprise a plastics core inserted between two wooden plates, and in that a light-metal sheet is provided on the outside of the plates and a plastics coating is provided on the inside.

22. A rail vehicle according to any one of claims 2 to 21, characterised in that the windows are provided continuously from access region to access region.

23. A rail vehicle according to any one of claims 2 to 22, characterised in that the windows and internal side-wall components are fixed to the side-wall pillars, the parapet chords and the door pillars by means of a glued joint.

24. A rail vehicle according to any one of claims 2 to 23, characterised in that the roof of the rail vehicle is formed from shaped parts.

25. A rail vehicle according to claim 24, characterised in that the shaped parts for the vehicle roof are of sandwich construction.

26. A rail vehicle according to any one of claims 2 to 25, characterised in that all the butt joints in the side-wall components, the windows and the shaped roof parts are sealed with sealing material.

27. A rail vehicle according to claim 9, characterised in that reinforced sections are provided for the door pillars (32) and are arranged on either side of each access opening.

28. A rail vehicle according to claim 9 or 27, characterised in that the same profile is provided for the door pillars (32) as for the side-wall pillars (30), and in that two parallel door pillars (32) are arranged on each side of each access opening and are interconnected and reinforced by means of oblique bars.

## Revendications

1. Procédé de fabrication d'un véhicule ferroviaire (10) pour le transport de voyageurs comprenant au moins une caisse (22) conçue en forme de bac muni d'un fond de caisse (24) et de parois latérales (34) attenantes a celui-ci, conçues comme une charpente à structure triangulée formée par des montants de parois latérales (30), des longerons inférieurs (26) et des membrures longitudinales supérieures (28), lesquelles membrures longitudinales supérieures (28) s'appuient les unes contre les autres par l'intermédiaire de poutres d'assemblage, lesquelles parois latérales (34) sont munies de fenêtres et de zones d'accès (16, 18) avec portes, les montants des parois latérales (30) étant disposés en zigzag et assemblés de manière à résister à la flexion avec les longerons inférieurs (26) et les membrures longitudinales supérieures (28) et étant utilisés comme des éléments de support pour les fenêtres et les panneaux d'habillage des parois latérales qui y sont fixés, caractérisé en ce que la caisse du véhicule (22) est formée par des pièces profilées (40) et des barres (50) coupées a longueur, en ce que les montants de parois latérales (30), les longerons (26) et les membrures longitudinales (28) sont formés par lesdites barres, en ce que les barres (50) assemblées avec les pièces profilées (40) sont alignées, en ce que les surfaces d'assemblage entre les barres (50) et les pièces profilées (40) sont revêtues de colle, en ce que, ensuite, les barres (50) et les pièces profilées (40) sont reliées par un assemblage collé dans lequel la colle durcit, et en ce que, ensuite, le revêtement intérieur et les fenêtres sont posées à l'aide d'une technique de collage en couche épaisse.

2. Véhicule ferroviaire (10) pour le transport de voyageurs pouvant être fabriqué conformément au procédé selon la revendication 1, comprenant au moins une caisse de véhicule (22) conçue en forme de bac muni d'un fond de caisse (24) et de parois latérales (34) attenantes à celui-ci, conçues comme une charpente à structure triangulée formée par des montants de parois latérales (30), des longerons inférieurs (26) et des membrures longitudinales supérieures (28), lesquelles membrures longitudinales supérieures (28) s'appuient les unes contre les autres par l'intermédiaire de poutres d'assemblage, lesquelles parois latérales (34) sont munies de fenêtres et de zones d'accès (16, 18) avec portes, caractérisé en ce que la caisse du véhicule (22) est formée par des pièces profilées (40) et des barres (50) assemblées les unes avec les autres, en ce que les montants de parois latérales (30), les longerons (26) et les membrures longitudinales (28) sont formées par lesdites barres, en ce que les pièces profilées (40) forment avec les barres (50) des noeuds d'assemblage, en ce que les barres (50) sont enfichées sur les pièces profilées (40) et présentent a cet effet des surfaces de contact communes, en ce que les surfaces de contact communes délimitent respectivement entre elles une fente (52) qui est remplie de colle utilisée pour former entre les barres profilées et les pièces profilées un assemblage par conjugaison de matière.

3. Véhicule ferroviaire selon la revendication 2, caractérisé en ce que les pièces profilées (40) sont des pièces moulées.

4. Véhicule ferroviaire selon la revendication 2, caractérisé en ce que les pièces profilées (40) sont des pièces forgées.

5. Véhicule ferroviaire selon l'une quelconque des revendications 2 à 4, caractérisé en ce que les pièces profilées (40) sont réalisées dans un alliage de métal léger.

6. Véhicule ferroviaire selon l'une quelconque des revendications 2 à 5, caractérisé en ce que, pour l'assemblage avec les barres (50), les pièces profilées (40) sont munies de zones d'assemblage (52), dont la longueur est définie en fonction des forces à transmettre.

7. Véhicule ferroviaire selon l'une quelconque des revendications 2 à 6, caractérisé en ce que le fond de caisse (24) est formé par un fond en tôle ondulée muni de traverses qui absorbe les forces de la charge utile et les transmet dans les parois latérales (34) et dans les longerons inférieurs (26) et en ce que les montants de parois latérales (30) font fonction d'éléments de support pour les fenêtres et les panneaux de revêtement latéraux qui y sont fixés et sont assemblés de manière à résister à la flexion avec les longerons inférieurs (26) et les membrures longitudinales supérieures (28).

8. Véhicule ferroviaire selon l'une quelconque des revendications 2 à 7, caractérisé en ce que les montants de parois latérales (30) sont disposés en oblique les uns par rapport aux autres en formant un angle de 60° ± 10°.

9. Véhicule ferroviaire selon l'une quelconque des revendications 2 à 8, caractérisé en ce que les montants de porte verticaux (32) sont uniquement prévus dans les zones d'accès (16, 18), lesquels montants sont également assemblés de manière à résister a la flexion avec les longerons inférieurs (26) et les membrures longitudinales supérieures (28) et encadrent respectivement une ouverture d'accès à fermer par des portes.

10. Véhicule ferroviaire selon l'une quelconque des revendications 2 à 9, caractérisé en ce que la caisse du véhicule (22) est formée par une zone de plate-forme (12) surbaissée comportant les zones d'accès (16, 18), contre les extrémités de laquelle se joignent les parties de tête (14, 15), dont le fond est situé à un niveau plus élevé que la zone de plate-forme surbaissée (12).

11. Véhicule ferroviaire selon l'une quelconque des revendications 2 à 10, caractérisé en ce que la zone de plate-forme surbaissée (12) occupe au moins 60 % de la surface utile de la caisse du véhicule (22).

12. Véhicule ferroviaire selon l'une quelconque des revendications 2 à 11, caractérisé en ce que des panneaux de revêtement latéraux sont posés contre la face intérieure depuis le bord inférieur des longerons (26) jusqu'au bord inférieur des fenêtres, ainsi que depuis le bord supérieur des fenêtres jusqu'aux membrures longitudinales supérieures (28).

13. Véhicule ferroviaire selon l'une quelconque des revendications 2 à 12, caractérisé en ce que des membrures d'appui sont prévues pour constituer des supports horizontaux pour les fenêtres et les panneaux de revêtement latéraux.

14. Véhicule ferroviaire selon la revendication 13, caractérisé en ce que les membrures d'appui sont assemblées avec les montants de parois latérales (30) par des assemblages à pinces et/ou des assemblages à vis et ne participent pas à la transmission des forces exercées par la charpente à structure triangulée.

15. Véhicule ferroviaire selon la revendication 13 ou 14, caractérisé en ce que les membrures d'appui sont disposées respectivement à hauteur du bord inférieur des fenêtres et du bord supérieur des fenêtres.

16. Véhicule ferroviaire selon l'une quelconque des revendications 2 à 15, caractérisé en ce que les panneaux de revêtement latéraux et les fenêtres sont juxtaposées à franc-bord.

17. Véhicule ferroviaire selon l'une quelconque des revendications 2 à 16, caractérisé en ce que les barres (50) utilisées pour la transmission des forces sont des profilés creux à section circulaire.

18. Véhicule ferroviaire selon l'une quelconque des revendications 2 à 16, caractérisé en ce que les barres (50) utilisées pour la transmission des forces sont des profilés creux à section rectangulaire.

19. Véhicule ferroviaire selon la revendication 17 ou 18, caractérisé en ce que, pour la transmission des forces, il est prévu des barres (50) formées par des profilés creux ouverts.

20. Véhicule ferroviaire selon l'une quelconque des revendications 2 à 19, caractérisé en ce que les panneaux muraux posés pour l'habillage extérieur sont des panneaux à structure sandwich.

21. Véhicule ferroviaire selon l'une quelconque des revendications 2 à 19, caractérisé en ce que les panneaux muraux pour l'habillage des faces extérieures comportent une âme en matière synthétique insérée entre deux panneaux en bois, et en ce qu'une plaque en métal léger est posée sur leur face extérieure et un revêtement en matière synthétique est posé sur leur face intérieure.

22. Véhicule ferroviaire selon l'une quelconque des revendications 2 à 21, caractérisé en ce que les fenêtres sont prévues en continu d'une zone d'accès à une autre.

23. Véhicule ferroviaire selon l'une quelconque des revendications 2 à 22, caractérisé en ce que les fenêtres et les panneaux muraux posés à l'intérieur sont fixés contre les montants de parois latérales, contre les membrures d'appui et contre les montants de porte, à l'aide d'un assemblage collé.

24. Véhicule ferroviaire selon l'une quelconque des revendications 2 à 23, caractérisé en ce que le toit du véhicule ferroviaire est formé par des pièces profilées.

25. Véhicule ferroviaire selon la revendication 24, caractérisé en ce que les pièces profilées pour le toit du véhicule sont réalisées avec une structure sandwich.

26. Véhicule ferroviaire selon l'une quelconque des revendications 2 à 25, caractérisé en ce que tous les joints contre les panneaux muraux latéraux, contre les fenêtres et contre les pièces profilées du toit sont obturés par un matériau d'étanchéité.

27. Véhicule ferroviaire selon la revendication 9, caractérisé en ce que des profilés renforcés sont prévus pour les montants de porte (32), qui sont disposés respectivement de part et d'autre de chaque ouverture d'accès.

28. Véhicule ferroviaire selon la revendication 9 ou 27, caractérisé en ce qu'il est prévu d'utiliser les mêmes profilés pour les montants de porte (32) et pour les montants de parois latérales (30) et en ce que respectivement deux montants de porte (32) parallèles sont montés de chaque côté de l'ouverture d'accès, lesquels montants sont assemblés l'un avec l'autre et renforcés par des traverses obliques.
